# EUROPEAN PATENT APPLICATION

(11) **EP 2 772 840 A1**
(43) Date of publication of application: **03.09.2014**
(21) Application number: 12844271.2
(22) Date of filing: 16.08.2012
(51) Int. Cl.: G06F 3/048

(54) **METHOD AND DEVICE FOR UPLOADING AND DOWNLOADING FILE**

(30) Priority: 27.10.2011 CN 201110331358
(71) Applicant: Tencent Technology (Shenzhen) Co., Ltd, Guangdong 518057 (CN)
(72) Inventor: LI, Yang, Shenzhen Guangdong 518057 (CN); WANG, Zhanwei, Shenzhen Guangdong 518057 (CN); HOU, Jie, Shenzhen Guangdong 518057 (CN)
(74) Representative: Platzöder, Michael Christian
(86) International application number: PCT/CN2012/080212
(87) International publication number: WO 2013/060184

(57) **Abstract**

Disclosed in the present invention are a method and a device for uploading and downloading files, which belongs to the technical field of computers. The method for uploading files includes, judging whether a local file which is dragged and stopped by a user is entering an activation area of a network file folder, prompting the user to choose whether the user confirms uploading the local file to the network file folder or not if it is, uploading the local file to the network file folder if a confirming uploading information chosen by the user according to the prompt is received. The method for downloading files includes, judging whether a network file dragged and stopped by the user is entering an activation area of a local file folder, prompting the user to choose whether the user confirms downloading the network file to the local file folder or not if it is, downloading the network file to the local file folder if a confirmation of downloading chosen by the user is received according to the prompt. The invention makes the user achieve the uploading or downloading tasks by using only one drag action, which leads to fewer response steps by user and more efficient.

## Description

### Technical Field

The invention relates to the field of computer technologies, particularly to a method and device for uploading and downloading files.

### Technical Background

A tablet PC is a small portable personal computer which usually is not provided with a mouse and a keyboard, and basic inputs and operations of the tablet PC are conducted through a touch screen. The tablet PC provides functions of browsing the Internet, sending and receiving an e-mail, viewing e-books, playing audios or videos, and viewing photos, etc. The common tablet PCs include the iPad, for example.

Nowadays, both uploading and downloading of files with the tablet PC such as the iPad are unidirectional. For example, to download a photo from a web album through an iPad, it is needed to open the photo to be downloaded, long press the photo to enable a pop-up download button, click on the download button and then select a local storage path, and then save the photo according to the storage path, thereby completing the downloading. If a local photo in the iPad is needed to be uploaded to a web album, it is needed to click on an upload button on the web album, find out the local photo through the storage path thereof, and then select and upload the local photo to be uploaded.

In implementing the invention, the inventors found that at least the following problems are present in the prior art:

in uploading and downloading of files with the tablet PCs in the prior art, a unique advantage of gesture interaction of the tablet PC is not fully utilized, thus the operations are not apparent, and many steps requires for responses from the user, thus a long time is required for completing the uploading and downloading of files.

### Summary of the Invention

Embodiments of the invention provide a method and device for uploading and downloading files in order to reduce the time required for completing the uploading and downloading of files. The technical solutions of the present invention are as follows.

In an aspect, there is provided a method for uploading files, which includes steps of:

determining whether a local file dragged by a user is within an activation area of a network folder at the end of the dragging;

if so, then prompting the user to choose whether to confirm or cancel the uploading of the local file to the network folder; and

uploading the local file to the network folder if the confirmation on the uploading that is made by the user in response to the prompt is received.

Further, before the step of determining whether the local file dragged by the user is within the activation area of the network folder at the end of the dragging, the method further includes steps of:

determining whether the local file is long pressed by the user through a touch screen;

if so, then determining whether the touch screen being pressed by the user is released by the user while the local file is being dragged by the user through a dragging gesture; and

if so, then performing the step of determining whether the local file dragged by the user is within the activation area of the network folder at the end of the dragging.

Optionally, the method further includes a step of:

displaying a thumbnail of the local file by means of a floating animation if it is determined that the touch screen being pressed by the user is released by the user.

Optionally, the method further includes a step of:

returning the local file to its original location, if it is determined that the local file dragged by the user is not within the activation area of the network folder at the end of the dragging, or that the cancellation on the uploading that is made by the user in response to the prompt is received.

In another aspect, there is provided a device for uploading files, which includes:

a first determination module for determining whether a local file dragged by a user is within an activation area of a network folder at the end of the dragging;

a prompt module for prompting the user to choose whether to confirm or cancel the uploading of the local file to the network folder when the first determination module determines that the local file dragged by the user is within the activation area of the network folder at the end of the dragging; and

an uploading module for uploading the local file to the network folder when the confirmation on the uploading that is made by the user in response to the prompt from the prompt module is received.

Also, the device further includes:

a second determination module, which is used for determining, before the first determination module determines whether the local file dragged by the user is within the activation area of the network folder at the end of the dragging, whether the local file is long pressed by the user through a touch screen; and

a third determination module, which is used for determining, when the second determination module determines that the local file is long pressed by the user through the touch screen, whether the touch screen being pressed by the user is released by the user while the local file is being dragged by the user through a dragging gesture, and if so, the first determination module is operated.

Optionally, the device further includes:

a display module for displaying a thumbnail of the local file by means of a floating animation when the third determination module determines that the touch screen being pressed by the user is released by the user.

Optionally, the device further includes:

a return module, which is used for returning the local file to its original location, when the first determination module determines that the local file dragged by the user is not within the activation area of the network folder at the end of the dragging, or that the cancellation on the uploading that is made by the user in response to the prompt from the prompt module is received.

In an aspect, there is also provided a method for downloading files, which includes steps of:

determining whether a network-side file dragged by a user is within an activation area of a local folder at the end of the dragging;

if so, then prompting the user to choose whether to confirm or cancel the downloading of the network-side file to the local folder; and

downloading the network-side file to the local folder if the confirmation on the downloading that is made by the user in response to the prompt is received.

Further, before the step of determining whether the network-side file dragged by the user is within the activation area of the local folder at the end of the dragging, the method further includes steps of:

determining whether the network-side file is long pressed by the user through a touch screen;

if so, then determining whether the touch screen being pressed by the user is released by the user while the network-side file is being dragged by the user through a dragging gesture; and

if so, then performing the step of determining whether the network-side file dragged by the user is within the activation area of the local folder at the end of the dragging.

Optionally, the method further includes a step of:

displaying a thumbnail of the network-side file by means of a floating animation if it is determined that the touch screen being pressed by the user is released by the user.

Optionally, the method further includes a step of:

returning the network-side file to its original location, if it is determined that the network-side file dragged by the user is not within the activation area of the local folder at the end of the dragging, or that the cancellation on the downloading that is made by the user in response to the prompt is received.

In another aspect, there is also provided a device for downloading files, which includes:

a first determination module for determining whether a network-side file dragged by a user is within an activation area of a local folder at the end of the dragging;

a prompt module for prompting the user to choose whether to confirm or cancel the downloading of the network-side file to the local folder when the first determination module determines that the network-side file dragged by the user is within the activation area of the local folder at the end of the dragging; and

a downloading module for downloading the network-side file to the local folder when the confirmation on the downloading that is made by the user in response to the prompt is received.

Further, the device further includes:

a second determination module, which is used for determining, before the first determination module determines whether the network-side file dragged by the user is within the activation area of the local folder at the end of the dragging, whether the network-side file is long pressed by the user through a touch screen; and

a third determination module, which is used for determining, when the second determination module determines that the network-side file is long pressed by the user through the touch screen, whether the touch screen being pressed by the user is released by the user while the network-side file is being dragged by the user through a dragging gesture, and if so, the first determination module is operated.

Optionally, the device further includes:

a display module for displaying a thumbnail of the network-side file by means of a floating animation when the third determination module determines that the touch screen being pressed by the user is released by the user.

Optionally, the device further includes:

a return module, which is used for returning the network-side file to its original location, when the first determination module determines that the network-side file dragged by the user is not within the activation area of the local folder at the end of the dragging, or that the cancellation on the downloading that is made by the user in response to the prompt is received.

The technical solutions provided by the embodiments of the present invention have beneficial effects as follows.

Through the long pressing and dragging gesture commonly used in the tablet PC such as the iPad, the user is allowed to drag the file across both areas of a local folder and a network folder, so that the local file to be uploaded can be dragged to the activation area of the network folder, or the network-side file to be downloaded can be dragged to the activation area of the local folder, and the uploading or downloading is implemented after the confirmation made by the user, that is, the uploading or downloading is implemented through merely a single drag action, which leads to less steps requiring for a response from the user, less time consumption, an improved efficiency, and hence improvement of the user experience, with comparison with the uploading and downloading of the file in the prior art. Further, it is easy for a user to get started with and conduct the long pressing and dragging gesture which is commonly used in the tablet PC such as the iPad.

### Description of Drawings

In order to more clearly illustrate the technical solutions in the embodiments of the present invention, accompanying drawings required for the description of the embodiments are simply introduced below. It is apparent that the drawings described below are merely some embodiments of the present invention, and additional drawings can also be obtained from these drawings described below without creative efforts by those skilled in the art.
Figure 1 is a flowchart of a method for uploading files according to a first embodiment of the present invention;
Figure 2 is a flowchart of a method for uploading files according to a second embodiment of the present invention;
Figure 3 is a schematic diagram of a drag action for uploading files according to the second embodiment of the present invention;
Figure 4 is a schematic diagram showing the structure of a device for uploading files according to a third embodiment of the present invention;
Figure 5 is a schematic diagram showing the structure of another device for uploading files according to the third embodiment of the present invention
Figure 6 is a schematic diagram showing the structure of another device for uploading files according to the third embodiment of the present invention;
Figure 7 a schematic diagram showing the structure of another device for uploading files according to the third embodiment of the present invention;
Figure 8 is a flowchart of a method for downloading files according to a fourth embodiment of the present invention;
Figure 9 is a flowchart of a method for downloading files according to a fifth embodiment of the present invention;
Figure 10 is a schematic diagram of a drag action for downloading files according to the fifth embodiment of the present invention;
Figure 11 is a schematic diagram showing the structure of a device for downloading files according to a sixth embodiment of the present invention;
Figure 12 is a schematic diagram showing the structure of another device for downloading files according to the sixth embodiment of the present invention
Figure 13 is a schematic diagram showing the structure of another device for downloading files according to the sixth embodiment of the present invention; and
Figure 14 a schematic diagram showing the structure of another device for downloading files according to the sixth embodiment of the present invention.

### Detailed description of the Preferred Embodiment

The embodiments of the invention will be described below in detail with reference to the drawings, in order to make the objects, technical solutions and advantages of the present invention more clear.

### A first embodiment

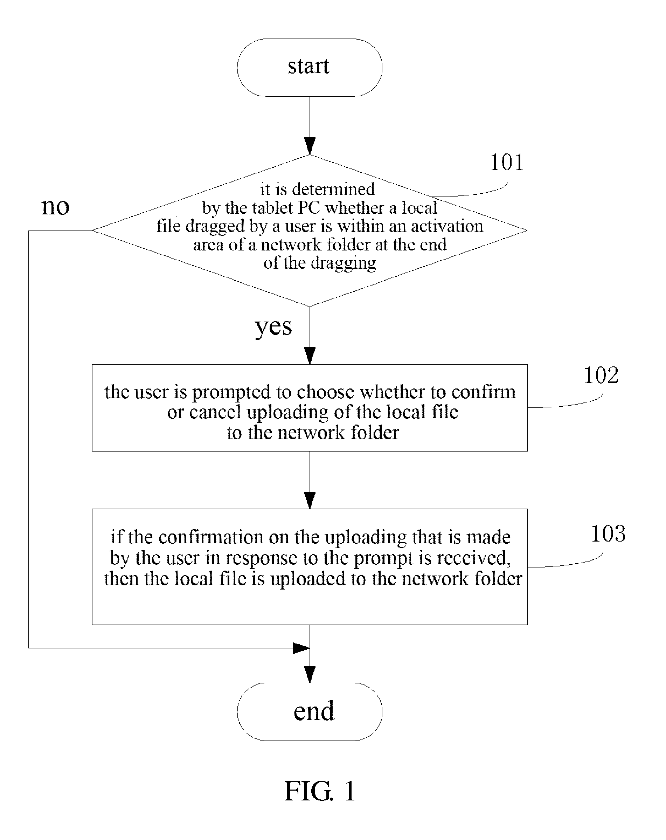

The embodiment of the invention provides a method for uploading files, which is suitable for any portable multifunction apparatus with a touch screen, such as a tablet PC, and a mobile phone with a touch screen, specifically such as the iPad and the iPhone. The embodiment of the invention will be specifically described below with reference to, for example, but not limited to, the tablet PC. Referring to Figure 1, the method includes the following steps from 101 to 103.

In the step 101, the tablet PC determines whether a local file dragged by a user is within an activation area of a network folder at the end of the dragging, and if so, then the step 102 is performed, otherwise the method is ended.

In the step 102, if the local file dragged by the user is within the activation area of the network folder at the end of the dragging, then the user is prompted to choose whether to confirm or cancel uploading of the local file to the network folder;

In the step 103, if the confirmation on the uploading selected by the user in response to the prompt is received, then the local file is uploaded to the network folder.

In the method provided by the embodiment of the invention, the drag gesture commonly used in the tablet PC such as the iPad is adopted, so that the local file to be uploaded is dragged to the the activation area of the network folder by the user using a single drag action, and the uploading of the local file to the network folder is performed after the confirmation on the uploading that is made by the user, that is, the uploading can be implemented just by a single drag action, which leads to less steps requiring for a response from the user, less time consumption, an improved efficiency, and hence improvement of the user experience, with comparison with the uploading of the file in the prior art.

### A second embodiment

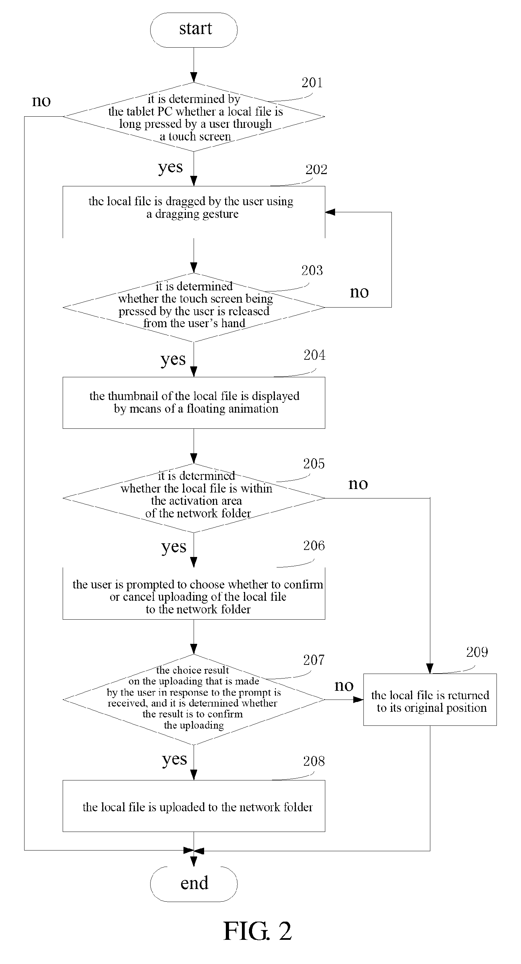

The embodiment of the invention provides a method for uploading files, which is suitable for any portable multifunction apparatuses with a touch screen, such as a tablet PC, a mobile phone with a touch screen, specifically such as the iPad and the iPhone. The embodiment of the invention will be specifically described below with reference to, for example, but not limited to, the tablet PC. Referring to Figure 2, the method includes the following steps from 201 to 209.

In the step 201, the tablet PC determines whether a local file is long pressed by a user through a touch screen, and if so, then the step 202 is performed, otherwise the method is ended.

In the use of the tablet PC such as the iPad, one of common gestures is to long press a certain icon on the touch screen of the tablet PC for the purpose of a certain operation. In this embodiment, the local files may be displayed in the tablet PC in the form of thumbnails. When the user browses a local file, the local file can be activated and chosen by means of the long pressing event on the thumbnail of the local file. The local file may be, for example, a local photo, a local document, a local audio and a local video.

In the step 202, when being long pressed by the user through the touch screen, the local file can be dragged by the user using a dragging gesture.

Specifically, after the local file is activated and chosen by the long pressing, the user may continue pressing the local file and move the local file using a dragging gesture, so that the local file may be moved anywhere on the touch screen.

In the step 203, when the local file is dragged by the user using the dragging gesture, it is determined whether the touch screen being pressed by the user is released by the user, and if so, the step 204 is performed, otherwise, the step 202 is performed.

Specifically, it is determined whether a screen releasing event occurs, that is, whether the user's hand is released from the touch screen, and the release of the user's hand from the touch screen means that the local file is released and stops moving.

In the step 204, if the touch screen being pressed by the user is released by the user, then the thumbnail of the local file is displayed by means of a floating animation.

Specifically, after the user releases the local file, the thumbnail of the local file is placed into a floating state.

In the step 205, it is determined whether the local file dragged by the user is within the activation area of the network folder at the end of the dragging, and if so, the step 206 is performed, otherwise, the step 209 is performed.

Specifically, network folders and a plurality of files in the local folder may be displayed simultaneously on the same interface of the Tablet PC, so that the user can preview the files in the local folder and the network folders simultaneously.

Optionally, the activation area of the network folder specifically may be an area used to display the network folder, and when the local file dragged by the user overlaps with the network folder at the end of the dragging, it can be determined that the local file is within the active area of the network folder, and then the subsequent uploading process is triggered.

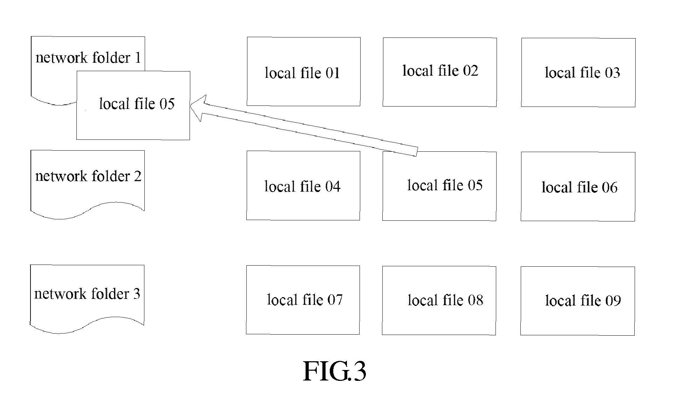

For example, as shown in Figure 3, the local files for browsing as well as available network folders are displayed simultaneously on the same interface of the Tablet PC. The local file to be uploaded can be dragged by the user to the respective network folder by a long pressing and dragging gesture. As shown in Figure 3, to upload the local file 05 to the network folder 1, the user long presses the local file 05, drags the local file 05 to the activation area of the network folder 1 without releasing his/her hand, and then releases his/her hand.

In the step 206, if the local file dragged by the user is within the activation area of the network folder at the end of the dragging, then the user is prompted to choose whether to confirm or cancel uploading of the local file to the network folder.

Specifically, the tablet PC may enable a pop-up uploading prompt box, in order to prompt the user to choose whether to confirm or cancel the uploading of the local file to the network folder, here, the user can chose to confirm or cancel the uploading.

In the step 207, the choice result on the uploading that is made by the user in response to the prompt is received, and it is determined whether the result is to confirm the uploading, and if so, the step 208 is performed, otherwise, the step 209 is performed.

Specifically, if the user chooses to confirm the uploading, then the uploading is confirmed, and if the user chooses to cancel the uploading, then the uploading is cancelled (see steps 208 and 209 for details).

In the step 208, if the confirmation on the uploading that is made by the user in response to the prompt is received, then the local file is uploaded to the network folder, and the method is ended.

The uploading of the local file is started, and the method is ended after the uploading is completed.

In the step 209, if it is determined that the local file dragged by the use is not within the activation area network folder at the end of the dragging, or that the cancellation on the uploading that is made by the user in response to the prompt is received, then the local file is returned to its original position, and the method is ended.

Specifically, through a sliding animation, the local file is automatically moved back to its original position, and the method is ended.

It should be noted that in the embodiments of the present invention, the local file may specifically be, but not limited to, a local photo, and the network folder may specifically be, but not limited to, a network album.

In the method provided by the embodiment of the invention, the network folders and the files in the local folder are simultaneously displayed on the same interface of the tablet PC, so that the user can simultaneously preview the files in the local folder and the network folders, so as to facilitate the positioning made by the user; with the long pressing and dragging gesture commonly used in the tablet PC such as the iPad, the user is allowed to drag the file across both areas of a local folder and a network folder by way of a dragging action, so that the local file to be uploaded can be dragged to the activation area of the network folder, and the uploading of the local file to the network folder is performed after the uploading is confirmed by the user, that is, the uploading is implemented through merely a single drag action, which leads to less steps requiring for a response from the user, less time consumption, an improved efficiency, and hence improvement of the user experience, with comparison with the uploading of the file in the prior art. Further, it is easy for a user to get started with and conduct the long pressing and dragging gesture which is commonly used in the tablet PC such as the iPad.

### A third embodiment

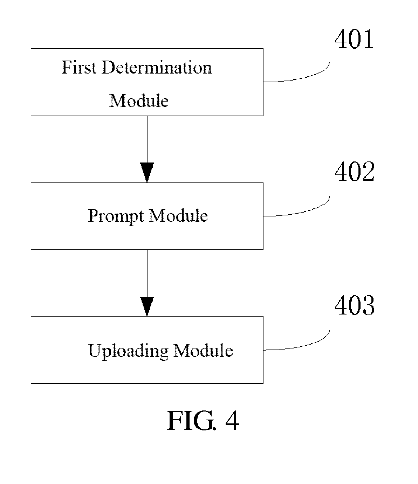

The embodiment of the invention provides a device for uploading files to implement the method shown in Figure 2. The device is applicable to a portable multifunction apparatus with a touch screen, such as a tablet PC and a mobile phone with a touch screen, specifically such as the iPad and the iPhone. Referring to Figure 4, the device includes:

a first determination module 401 for determining whether a local file dragged by a user is within an activation area of a network folder at the end of the dragging;

a prompt module 402 for prompting the user to choose whether to confirm or cancel uploading of the local file to the network folder when the first determination module 401 determines that the local file dragged by the user is within the activation area of the network folder at the end of the dragging; and

an uploading module 403 for uploading the local file to the network folder when the confirmation on the uploading that is made by the user in response to the prompt from the prompt module 402 is received.

Specifically, network folders and a plurality of files in the local folder may be simultaneously displayed on the same interface of the Tablet PC, so that the user can simultaneously preview the files in the local folder and the network folders

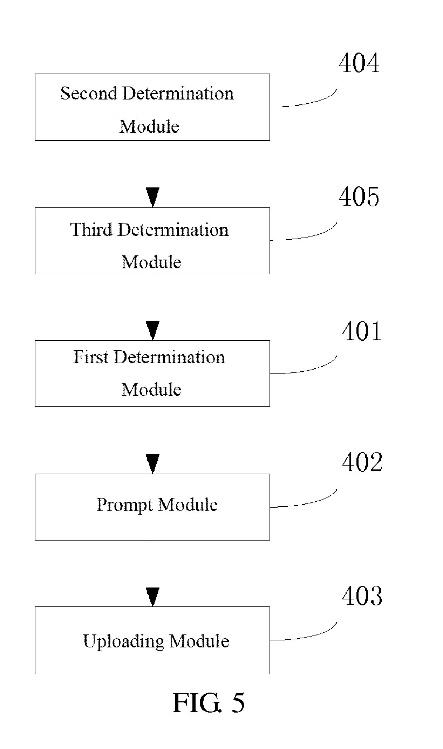

Further, referring to Figure 5, the device also includes:

a second determination module 404, which is used for determining, before the first determination module 401 determines whether the local file dragged by the user is within the activation area of the network folder at the end of the dragging, whether the local file is long pressed by the user through a touch screen; and

a third determination module 405, which is used for determining, when the second determination module 404 determines that the local file is long pressed by the user through the touch screen, whether the touch screen being pressed by the user is released by the user while the local file is being dragged by the user through a dragging gesture, and if so, the first determination module 401 is operated.

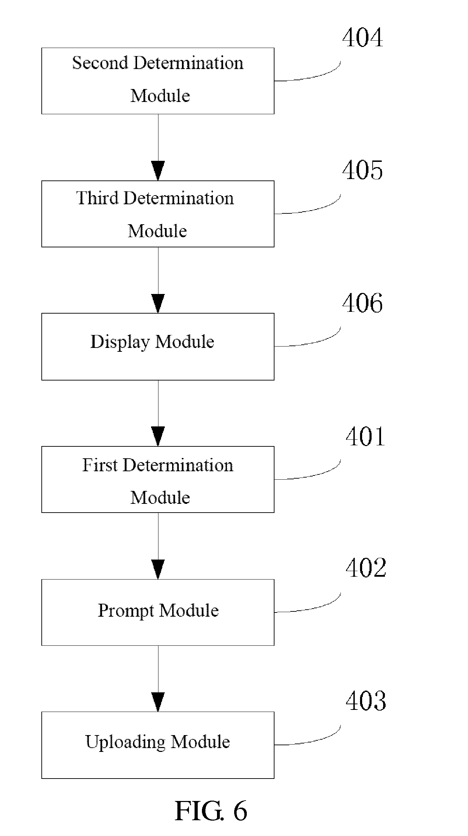

Optionally, referring to Figure 6, the device further includes:

a display module 406 for displaying a thumbnail of the local file by means of a floating animation when the third determination module 405 determines that the touch screen being pressed by the user is released by the user.

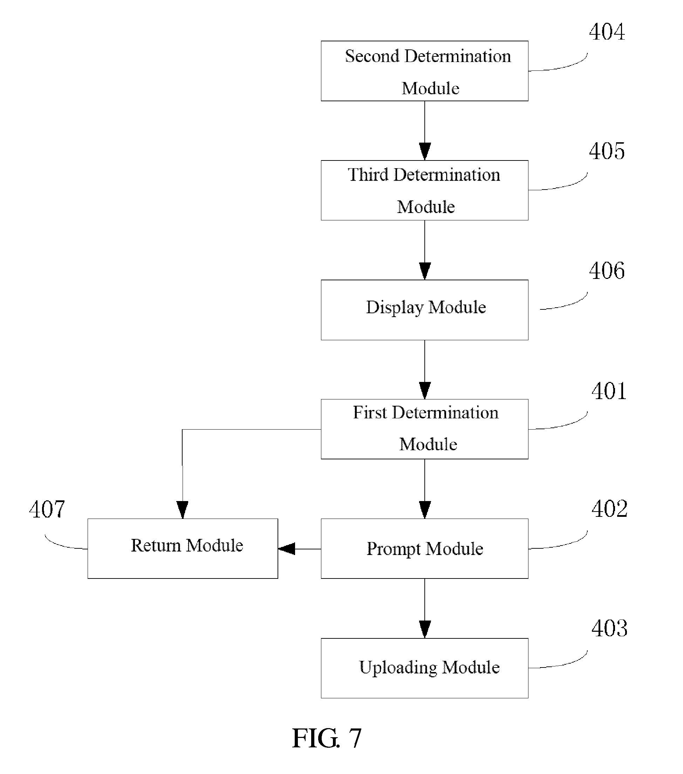

Optionally, referring to Figure 7, the device further includes:

a return module 407, which is used for returning the local file to its original location, when the first determination module 401 determines that the local file dragged by the user is not within the activation area of the network folder at the end of the dragging, or that the cancellation on the uploading that is made by the user in response to the prompt from the prompt module 402 is received.

In the device provided by the embodiment of the invention, the network folders and the files in the local folder are simultaneously displayed on the same interface of the tablet PC, so that the user can simultaneously preview the files in the local folder and the network folders, so as to facilitate the positioning made by the user; with the long pressing and dragging gesture commonly used in the tablet PC such as the iPad, the user is allowed to drag the file across both areas of a local folder and a network folder by way of a dragging action, so that the local file to be uploaded can be dragged to the activation area of the network folder, and the uploading of the local file to the network folder is performed after the uploading is confirmed by the user, that is, the uploading is implemented through merely a single drag action, which leads to less steps requiring for a response from the user, less time consumption, an improved efficiency, and hence improvement of the user experience, with comparison with the uploading of the file in the prior art. Further, it is easy for a user to get started with and conduct the long pressing and dragging gesture which is commonly used in the tablet PC such as the iPad.

### A fourth embodiment

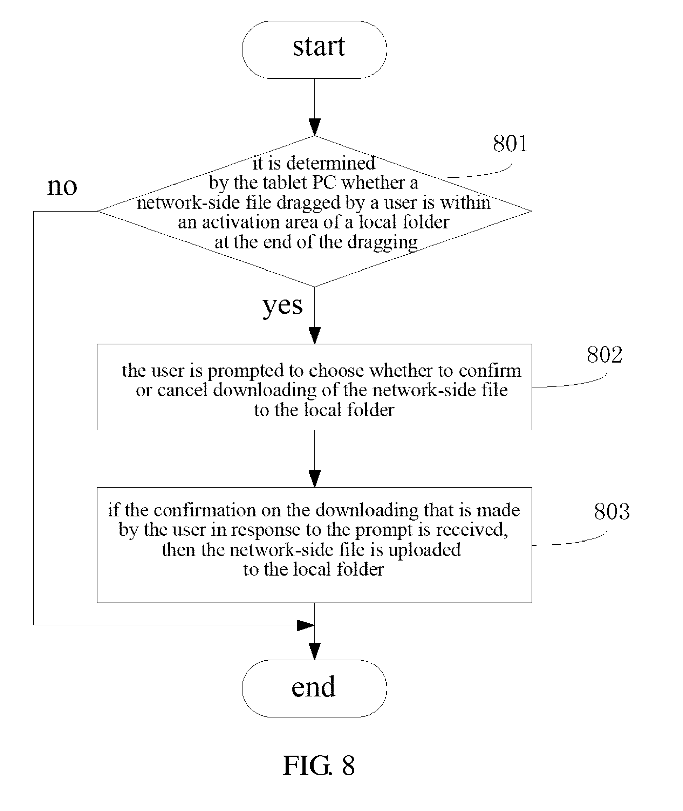

The embodiment of the invention provides a method for downloading files, which is suitable for any portable multifunction apparatus with a touch screen, such as a tablet PC, and a mobile phone with a touch screen, specifically such as the iPad and the iPhone. The embodiment of the invention will be specifically described below with reference to, for example, but not limited to, the tablet PC. Referring to Figure 8, the method includes the following steps from 801 to 803.

In the step 801, the tablet PC determines whether a network-side file dragged by a user is within an activation area of a local folder at the end of the dragging, and if so, then the step 802 is performed, otherwise the method is ended.

In the step 802, if the network-side file dragged by the user is within the activation area of the local folder at the end of the dragging, then the user is prompted to choose whether to confirm or cancel downloading of the network-side file to the local folder;

In the step 803, if the confirmation on the downloading selected by the user in response to the prompt is received, then the network-side file is downloaded to the local folder.

In the method provided by the embodiment of the invention, the drag gesture commonly used in the tablet PC such as the iPad is adopted, so that the network-side file to be downloaded is dragged to the the activation area of the local folder by the user using a single drag action, and the downloading of the network-side file to the local folder is performed after the confirmation on the downloading that is made by the user, that is, the downloading can be implemented just by a single drag action, which leads to less steps requiring for a response from the user, less time consumption, an improved efficiency, and hence improvement of the user experience, with comparison with the downloading of the file in the prior art.

### A fifth embodiment

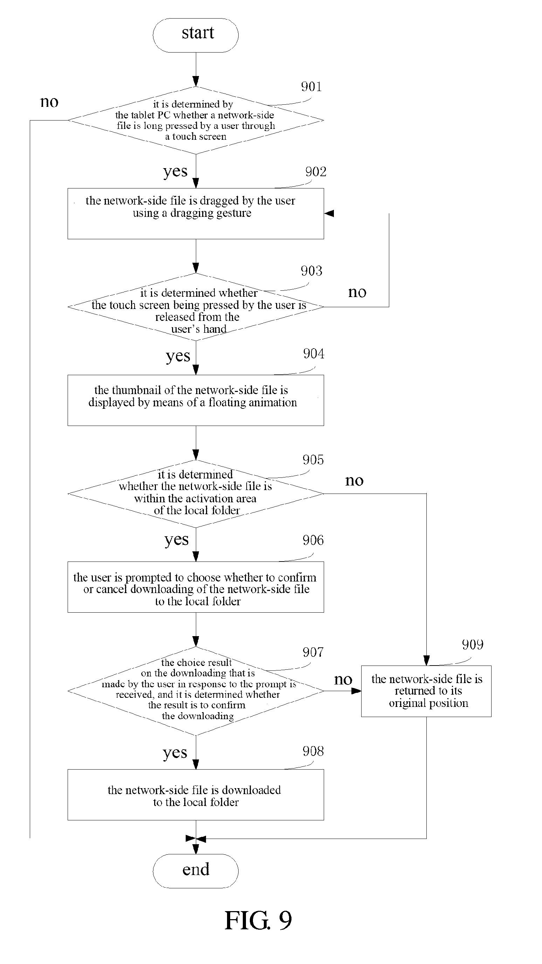

The embodiment of the invention provides a method for downloading files, which is suitable for apparatuses such as a tablet PC and a mobile phone, specifically such as the iPad and the iPhone. The embodiment of the invention will be specifically described below with reference to, for example, but not limited to, the tablet PC. Referring to Figure 9, the method includes the following steps from 901 to 909.

In the step 901, the tablet PC determines whether a network-side file is long pressed by a user through a touch screen, and if so, then the step 902 is performed, otherwise the method is ended.

In the use of the tablet PC such as the iPad, one of common gestures is to long press a certain icon on the touch screen of the tablet PC for the purpose of a certain operation. In this embodiment, the network-side files may be displayed in the tablet PC in the form of thumbnails. When the user browses a network-side file, the network-side file can be activated and chosen by means of the long pressing event on the thumbnail of the network-side file. The network-side file may be, for example, a photo in a network album, and a document, an audio and a video in a network disk, etc.

In the step 902, when being long pressed by the user through the touch screen, the network-side file can be dragged by the user using a dragging gesture.

Specifically, after the network-side file is activated and chosen by the long pressing, the user may continue pressing the network-side file and move the network-side file using a dragging gesture, so that the network-side file may be moved anywhere on the touch screen.

In the step 903, when the network-side file is dragged by the user using the dragging gesture, it is determined whether the touch screen being pressed by the user is released by the user, and if so, the step 904 is performed, otherwise, the step 902 is performed.

Specifically, it is determined whether a screen releasing event occurs, that is, whether the user's hand is released from the touch screen, and the release of the user's hand from the touch screen means that the network-side file is released and stops moving.

In the step 904, if the touch screen being pressed by the user is released by the user, then the thumbnail of the network-side file is displayed by means of a floating animation.

Specifically, after the user releases the network-side file, the thumbnail of the network-side file is placed into a floating state.

In the step 905, it is determined whether the network-side file dragged by the user is within the activation area of the local folder at the end of the dragging, and if so, the step 906 is performed, otherwise, the step 909 is performed.

Specifically, local folders and a plurality of network-side files may be displayed simultaneously on the same interface of the Tablet PC, so that the user can preview the local folders and the plurality of network-side files simultaneously.

Optionally, the activation area of the local folder specifically may be an area used to display the local folder, and when the network-side file dragged by the user overlaps with the local folder at the end of the dragging, it can be determined that the network-side file is within the active area of the local folder, and then the subsequent downloading process is triggered.

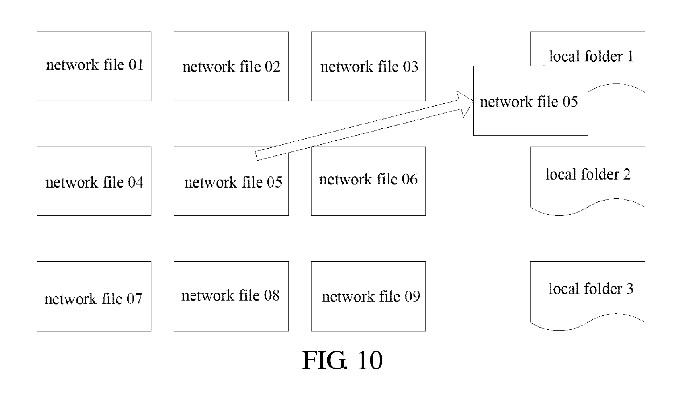

For example, as shown in Figure 10, the network-side files for browsing as well as available local folders are displayed simultaneously on the same interface of the Tablet PC. The network-side file to be uploaded can be dragged by the user to the respective local folder by a long pressing and dragging gesture. As shown in Figure 10, to upload the network-side file 05 to the local folder 1, the user long presses the network-side file 05, drags the network-side file 05 to the activation area of the local folder 1 without releasing his/her hand, and then releases his/her hand.

In the step 906, if the network-side file dragged by the user is within the activation area of the local folder at the end of the dragging, then the user is prompted to choose whether to confirm or cancel downloading of the network-side file to the local folder.

Specifically, the tablet PC may enable a pop-up downloading prompt box, in order to prompt the user to choose whether to confirm or cancel the downloading of the network-side file to the local folder, here, the user can chose to confirm or cancel the downloading.

In the step 907, the choice result on the downloading that is made by the user in response to the prompt is received, and it is determined whether the result is to confirm the downloading, and if so, the step 908 is performed, otherwise, the step 909 is performed.

Specifically, if the user chooses to confirm the downloading, then the downloading is confirmed, and if the user chooses to cancel the downloading, then the downloading is cancelled (see steps 908 and 909 for details).

In the step 908, if the confirmation on the downloading that is made by the user in response to the prompt is received, then the network-side file is downloaded to the local folder, and the method is ended.

The downloading of the network-side file is started, and the method is ended after the downloading is completed.

In the step 909, if it is determined that the network-side file dragged by the use is not within the activation area local folder at the end of the dragging, or that the cancellation on the downloading that is made by the user in response to the prompt is received, then the network-side file is returned to its original position, and the method is ended.

Specifically, through a sliding animation, the network-side file is automatically moved back to its original position, and the method is ended.

It should be noted that in the embodiments of the present invention, the network-side file may specifically be, but not limited to, a photo in a network album, and the local folder may specifically be, but not limited to, a local album.

In the method provided by the embodiment of the invention, the local folders and the network-side files are simultaneously displayed on the same interface of the tablet PC, so that the user can simultaneously preview the network-side files and the local folders, so as to facilitate the positioning made by the user; with the long pressing and dragging gesture commonly used in the tablet PC such as the iPad, the user is allowed to drag the file across both areas of a network folder and a local folder by way of a dragging action, so that the network-side file to be uploaded can be dragged to the activation area of the local folder, and the downloading of the network-side file to the local folder is performed after the downloading is confirmed by the user, that is, the downloading is implemented through merely a single drag action, which leads to less steps requiring for a response from the user, less time consumption, an improved efficiency, and hence improvement of the user experience, with comparison with the downloading of the file in the prior art. Further, it is easy for a user to get started with and conduct the long pressing and dragging gesture which is commonly used in the tablet PC such as the iPad.

### A sixth embodiment

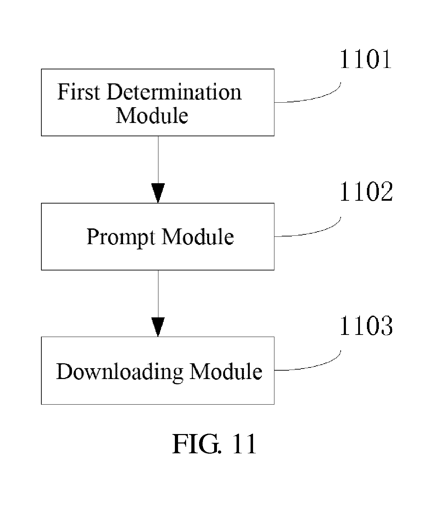

The embodiment of the invention provides a device for downloading files to implement the method shown in Figure 9. The device is applicable to a portable multifunction apparatus with a touch screen, such as a tablet PC and a mobile phone with a touch screen, specifically such as the iPad and the iPhone. Referring to Figure 11, the device includes:

a first determination module 1101 for determining whether a network-side file dragged by a user is within an activation area of a local folder at the end of the dragging;

a prompt module 1102 for prompting the user to choose whether to confirm or cancel downloading of the network-side file to the local folder when the first determination module 1101 determines that the network-side file dragged by the user is within the activation area of the local folder at the end of the dragging; and

an downloading module 1103 for downloading the network-side file to the local folder when the confirmation on the downloading that is made by the user in response to the prompt from the prompt module 1102 is received.

Specifically, local folders and a plurality of network-side files may be simultaneously displayed on the same interface of the Tablet PC, so that the user can simultaneously preview the plurality of network-side files and the local folders

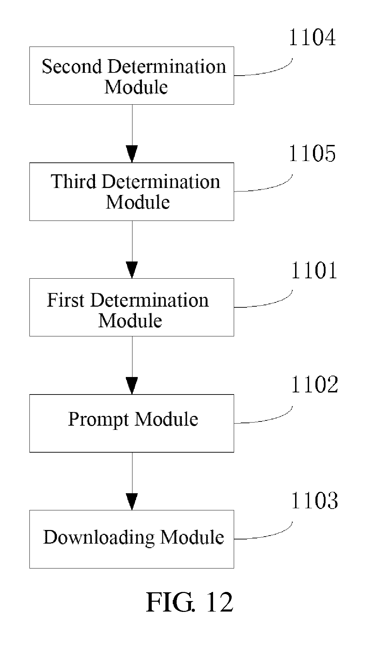

Further, referring to Figure 12, the device also includes:

a second determination module 1104, which is used for determining, before the first determination module 1101 determines whether the network-side file dragged by the user is within the activation area of the local folder at the end of the dragging, whether the network-side file is long pressed by the user through a touch screen; and

a third determination module 1105, which is used for determining, when the second determination module 1104 determines that the network-side file is long pressed by the user through the touch screen, whether the touch screen being pressed by the user is released by the user while the network-side file is being dragged by the user through a dragging gesture, and if so, the first determination module 1101 is operated.

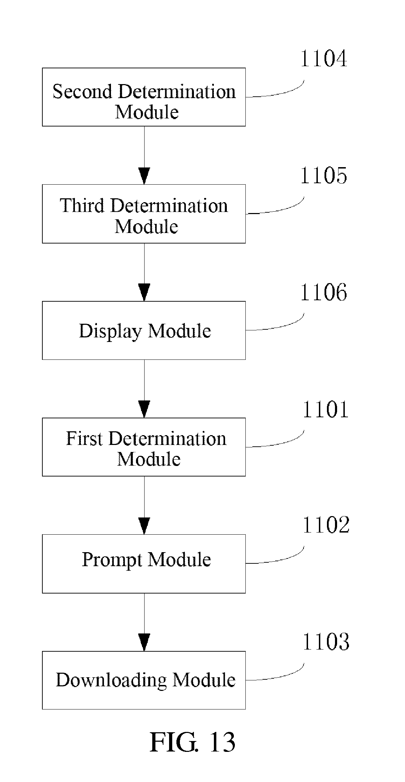

Optionally, referring to Figure 13, the device further includes:

a display module 1106 for displaying a thumbnail of the network-side file by means of a floating animation when the third determination module 1105 determines that the touch screen being pressed by the user is released by the user.

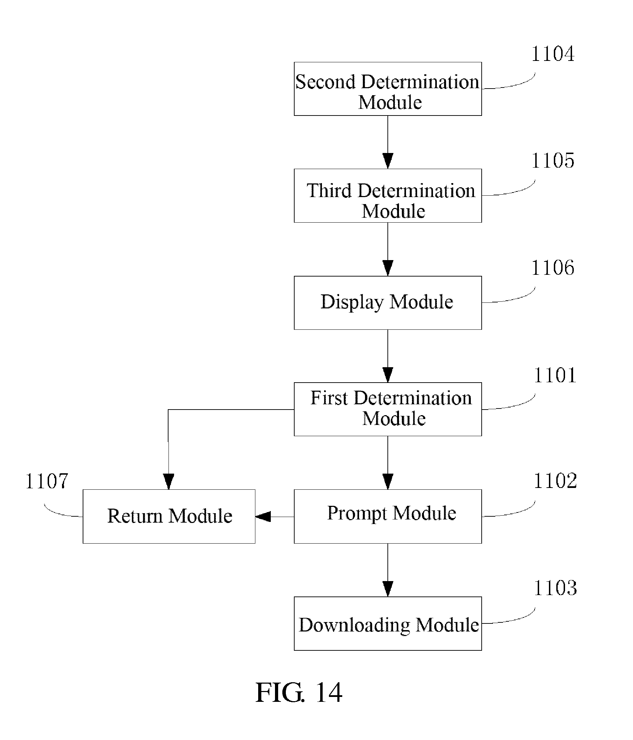

Optionally, referring to Figure 14, the device further includes:

a return module 1107, which is used for returning the network-side file to its original location, when the first determination module 1101 determines that the network-side file dragged by the user is not within the activation area of the local folder at the end of the dragging, or that the cancellation on the downloading that is made by the user in response to the prompt from the prompt module 1102 is received.

In the device provided by the embodiment of the invention, the local folders and the network-side files are simultaneously displayed on the same interface of the tablet PC, so that the user can simultaneously preview the network-side files and the local folders, so as to facilitate the positioning made by the user; with the long pressing and dragging gesture commonly used in the tablet PC such as the iPad, the user is allowed to drag the file across both areas of a network folder and a local folder by way of a dragging action, so that the network-side file to be uploaded can be dragged to the activation area of the local folder, and the downloading of the network-side file to the local folder is performed after the downloading is confirmed by the user, that is, the downloading is implemented through merely a single drag action, which leads to less steps requiring for a response from the user, less time consumption, an improved efficiency, and hence improvement of the user experience, with comparison with the downloading of the file in the prior art. Further, it is easy for a user to get started with and conduct the long pressing and dragging gesture which is commonly used in the tablet PC such as the iPad.

It should be noted that the device for uploading and downloading files as provided in above embodiments is divided illustratively into the above functional modules for uploading and downloading files. In practical applications, the above functions can be assigned to and implemented by different functional modules as desired, that is, the internal structure of the device may be divided into different functional modules to implement all or part of the functions described above. In addition, the device for uploading and downloading files embodies a concept the same as that of the method for uploading and downloading files as provided in the above-described embodiments, and specific implementation process thereof is not described again hereinafter and reference may be made to the embodiment of the method.

The sequence numbers of the embodiments of the present invention are just for description, and do not represent the superiority of the embodiments.

It can be understood by those skilled in the art that all or part of the steps in the above embodiments can be implemented by hardware, or by relevant hardware instructed by a program which may be stored in a computer-readable storage medium, and the storage medium mentioned above may be a Read-Only Memory, a magnetic or optical disk, etc.

The foregoing just introduced preferred embodiments of the present invention, and is not intended to limit the invention. Any modification, equivalent replacement, improvement, etc., made within the principle of the present invention shall fall in the protection scope of the present invention.

### Industrial Applicability

Through the long pressing and dragging gesture commonly used in the tablet PC such as the iPad, the user is allowed to drag the file across both areas of a local folder and a network folder, so that the local file to be uploaded can be dragged to the activation area of the network folder, or the network-side file to be downloaded can be dragged to the activation area of the local folder, and the uploading or downloading is implemented after the confirmation made by the user, that is, the uploading or downloading is implemented through merely a single drag action, which leads to less steps requiring for a response from the user, less time consumption, an improved efficiency, and hence improvement of the user experience, with comparison with the uploading and downloading of the file in the prior art. Further, it is easy for a user to get started with and conduct the long pressing and dragging gesture which is commonly used in the tablet PC such as the iPad.

## Claims

1. A method for uploading files, which is suitable for any portable multifunction apparatus with a touch screen, comprising steps of:
determining whether a local file dragged by a user is within an activation area of a network folder at the end of the dragging;
if so, then prompting the user to choose whether to confirm or cancel the uploading of the local file to the network folder; and
uploading the local file to the network folder if the confirmation on the uploading that is made by the user in response to the prompt is received.

2. The method of claim 1, wherein before the step of determining whether the local file dragged by the user is within the activation area of the network folder at the end of the dragging, the method further comprises steps of:
determining whether the local file is long pressed by the user through a touch screen;
if so, then determining whether the touch screen being pressed by the user is released by the user while the local file is being dragged by the user through a dragging gesture; and
if so, then performing the step of determining whether the local file dragged by the user is within the activation area of the network folder at the end of the dragging.

3. The method of claim 2, wherein the method further comprises a step of:
displaying a thumbnail of the local file by means of a floating animation if it is determined that the touch screen being pressed by the user is released by the user.

4. The method of claim 1, wherein the method further comprises a step of:
returning the local file to its original location, if it is determined that the local file dragged by the user is not within the activation area of the network folder at the end of the dragging, or that the cancellation on the uploading that is made by the user in response to the prompt is received

5. A device for uploading files, which is suitable for any portable multifunction apparatus with a touch screen, comprising:
a first determination module for determining whether a local file dragged by a user is within an activation area of a network folder at the end of the dragging;
a prompt module for prompting the user to choose whether to confirm or cancel the uploading of the local file to the network folder when the first determination module determines that the local file dragged by the user is within the activation area of the network folder at the end of the dragging; and
an uploading module for uploading the local file to the network folder when the confirmation on the uploading that is made by the user in response to the prompt from the prompt module is received.

6. The device of claim 5, wherein the device further comprises:
a second determination module, which is used for determining, before the first determination module determines whether the local file dragged by the user is within the activation area of the network folder at the end of the dragging, whether the local file is long pressed by the user through a touch screen; and
a third determination module, which is used for determining, when the second determination module determines that the local file is long pressed by the user through the touch screen, whether the touch screen being pressed by the user is released by the user while the local file is being dragged by the user through a dragging gesture, and if so, the first determination module is operated.

7. The device of claim 6, wherein the device further comprises:
a display module for displaying a thumbnail of the local file by means of a floating animation when the third determination module determines that the touch screen being pressed by the user is released by the user.

8. The device of claim 5, wherein the device further comprises:
a return module, which is used for returning the local file to its original location, when the first determination module determines that the local file dragged by the user is not within the activation area of the network folder at the end of the dragging, or that the cancellation on the uploading that is made by the user in response to the prompt from the prompt module is received.

9. A method for downloading files, which is suitable for any portable multifunction apparatus with a touch screen, comprising steps of:
determining whether a network-side file dragged by a user is within an activation area of a local folder at the end of the dragging;
if so, then prompting the user to choose whether to confirm or cancel the downloading of the network-side file to the local folder; and
downloading the network-side file to the local folder if the confirmation on the downloading that is made by the user in response to the prompt is received.

10. The method of claim 9, wherein before the step of determining whether the network-side file dragged by the user is within the activation area of the local folder at the end of the dragging, the method further comprises steps of:
determining whether the network-side file is long pressed by the user through a touch screen;
if so, then determining whether the touch screen being pressed by the user is released by the user while the network-side file is being dragged by the user through a dragging gesture; and
if so, then performing the step of determining whether the network-side file dragged by the user is within the activation area of the local folder at the end of the dragging.

11. The method of claim 10, wherein the method further comprises a step of:
displaying a thumbnail of the network-side file by means of a floating animation if it is determined that the touch screen being pressed by the user is released by the user.

12. The method of claim 9, wherein the method further comprises a step of:
returning the network-side file to its original location, if it is determined that the network-side file dragged by the user is not within the activation area of the local folder at the end of the dragging, or that the cancellation on the downloading that is made by the user in response to the prompt is received.

13. A device for downloading files, which is suitable for any portable multifunction apparatus with a touch screen, comprising:
a first determination module for determining whether a network-side file dragged by a user is within an activation area of a local folder at the end of the dragging;
a prompt module for prompting the user to choose whether to confirm or cancel the downloading of the network-side file to the local folder when the first determination module determines that the network-side file dragged by the user is within the activation area of the local folder at the end of the dragging; and
a downloading module for downloading the network-side file to the local folder when the confirmation on the downloading that is made by the user in response to the prompt is received.

14. The device of claim 13, wherein the device further comprises:
a second determination module, which is used for determining, before the first determination module determines whether the network-side file dragged by the user is within the activation area of the local folder at the end of the dragging, whether the network-side file is long pressed by the user through a touch screen; and
a third determination module, which is used for determining, when the second determination module determines that the network-side file is long pressed by the user through the touch screen, whether the touch screen being pressed by the user is released by the user while the network-side file is being dragged by the user through a dragging gesture, and if so, the first determination module is operated.

15. The device of claim 14, wherein the device further comprises:
a display module for displaying a thumbnail of the network-side file by means of a floating animation when the third determination module determines that the touch screen being pressed by the user is released by the user.

16. The device of claim 13, wherein the device further comprises:
a return module, which is used for returning the network-side file to its original location, when the first determination module determines that the network-side file dragged by the user is not within the activation area of the local folder at the end of the dragging, or that the cancellation on the downloading that is made by the user in response to the prompt is received.
